# FASCICULE DE BREVET EUROPEEN

(11) **EP 0 746 716 B1**
(45) Date de publication et mention de la délivrance du brevet: **24.09.1997**
(21) Numéro de dépôt: 95910585.9
(22) Date de dépôt: 22.02.1995
(51) Int. Cl.: F16L 9/147

(54) **CONDUIT COMPOSITE FORMABLE A FROID**
KALT FORMBARES VERBUNDROHR
COLD-FORMABLE COMPOSITE PIPE

(30) Priorité: 22.02.1994 FR 9402343
(43) Date de publication de la demande: 11.12.1996
(73) Titulaire: M.R. INDUSTRIES, 42400 Saint-Chamond (FR)
(72) Inventeur: GRANDOUILLER, Alain, F-42100 Saint Etienne (FR); COLCOMBET, Thierry, F-69450 Saintcyr au Mont d'Or (FR)
(74) Mandataire: Perrier, Jean-Pierre
(86) Numéro de dépôt international: FR9500210
(87) Numéro de publication internationale: WO9522712

(56) Documents cités:
- EP-A- 0 375 608
- DE-A- 2 845 908
- DE-A- 3 016 134
- DE-A- 3 023 214
- DE-A- 3 104 161
- FR-A- 2 516 443
- US-A- 4 421 827

## Description

La présente invention concerne un conduit composite formable à froid, pouvant constituer une canalisation pour le transport de tout fluide, tel que eau, essence, air, ou lubrifiant, notamment sous pression.

Conformément au document EP-A-0270347, on a décrit un tel conduit, comprenant de l'intérieur vers l'extérieur :
- un tube interne, obtenu par extrusion, en un premier matériau thermoplastique,
- une armature de renfort, comprenant un ruban métallique continu entourant le tube interne, avec chevauchement de ses bords, en définissant entre eux un joint de raccordement, et formant ainsi une gaine métallique tubulaire, ledit ruban métallique étant lié au tube interne par un premier adhésif,
- une gaine externe, obtenue par extrusion, en un second matériau thermoplastique, ayant une nature chimique différente de celle du premier matériau thermoplastique; cette gaine externe est liée à l'armature de renfort par un deuxième adhésif compatible avec le deuxième matériau thermoplastique,
- moyennant quoi, le joint met en vis-à-vis une première bande interne du premier adhésif, et une deuxième bande interne du deuxième adhésif.

Selon ce document, dans la configuration définie précédemment, on envisage de mettre en oeuvre un premier adhésif compatible avec le premier matériau thermoplastique (polyamide), tout en observant aussitôt qu'il existe déjà dans le commerce, sous la dénomination "ZETABON" (marque enregistrée de Dow Chemical Company), des rubans métalliques revêtus sur les deux faces de l'adhésif défini chimiquement précédemment, lequel est compatible avec le deuxième matériau thermoplastique (polyéthylène), mais pas avec le premier matériau thermoplastique (polyamide). En mettant en oeuvre néanmoins le ruban "ZETABON", ceci conduit, soit à renoncer à une liaison effective entre le tube interne et l'armature de renfort, soit à adopter pour le tube interne un matériau thermoplastique, de même nature ou identique au deuxième matériau thermoplastique, à savoir un polyéthylène.

Quelque soit le cas envisagé, on aboutit selon le document EP-A-0270347 à un conduit composite aux performances limitées, notamment en termes d'étanchéité ou mécaniques.

La présente invention a donc pour objet un conduit composite, tel que défini précédemment, à haute performance, pouvant notamment être utilisé pour transporter toutes sortes de fluides, y compris des fluides volatils, notamment sous pression, et éventuellement à des températures relativement importantes, par exemple au-dessus de 100°C, et ceci dans de très bonnes conditions d'étanchéité, d'une part, et de résistance mécanique ou élasticité, d'autre part.

Conformément à la présente invention, les première et deuxième bandes internes du joint liées l'une à l'autre, sont réticulées ou co-réticulées chimiquement, et forment ainsi une liaison cohérente.

Grâce à l'invention, il devient possible d'utiliser deux matériaux thermoplastiques différents, respectivement pour le tube interne et la gaine externe, dont l'un "technique" pour le tube interne par exemple, tout en liant effectivement ces deux matériaux à l'armature de renfort, et ceci sans compromettre, voire même en renforçant l'étanchéité du joint.

Par "cohérente" ou "cohérence", on entend une jonction qui solidarise les deux bandes internes d'adhésif en vis-à-vis du joint de raccordement de l'armature de renfort, sans discontinuité susceptible de conduire à une rupture de l'étanchéité dudit joint.

Un moyen de liaison cohérente peut être illustré par la jonction, par exemple par fusion, de deux matériaux identiques.

Grâce à la présente invention, il devient possible de choisir un tube interne, d'une part, relativement inerte vis-à-vis des fluides transportés, et, d'autre part, relativement résistant à la pression et en température, obtenu par exemple en un matériau thermoplastique technique, par exemple un polyamide, et d'autre part une gaine externe différente du tube externe contribuant seulement à la protection du conduit, obtenue par exemple en une matière plastique moins technique, par exemple un polyéthylène, notamment chargé avec une charge ignifuge.

Selon la présente invention, la différenciation des matériaux thermoplastiques du tube interne et de la gaine externe, respectivement, ne compromet pas l'étanchéité et la résistance mécanique du joint de raccordement de l'armature de renfort, grâce à la cohérence du moyen de liaison, vis-à-vis des adhésifs retenus pour le tube interne et la gaine externe.

Au total, les caractéristiques retenues selon l'invention, coopérant entre elles, permettent d'obtenir un conduit composite, formable à froid, de caractère "universel", en ce sens qu'il permet directement un transport relativement sûr de toutes sortes de fluide, y compris des fluides relativement volatils, comme de l'essence, ou du méthanol par exemple.

La présente invention est maintenant décrite par référence au dessin annexé dans lequel :
- la figure 1 est une vue en coupe transversale d'un conduit composite selon l'invention
- la figure 2 est une vue schématique, montrant à échelle réduite une chaîne de fabrication d'un conduit selon figure 1
- la figure 3 est une vue en perspective montrant une forme de réalisation d'un élément de conduit, obtenu à partir d'un conduit selon l'invention, découpé et formé en fonction de son utilisation.

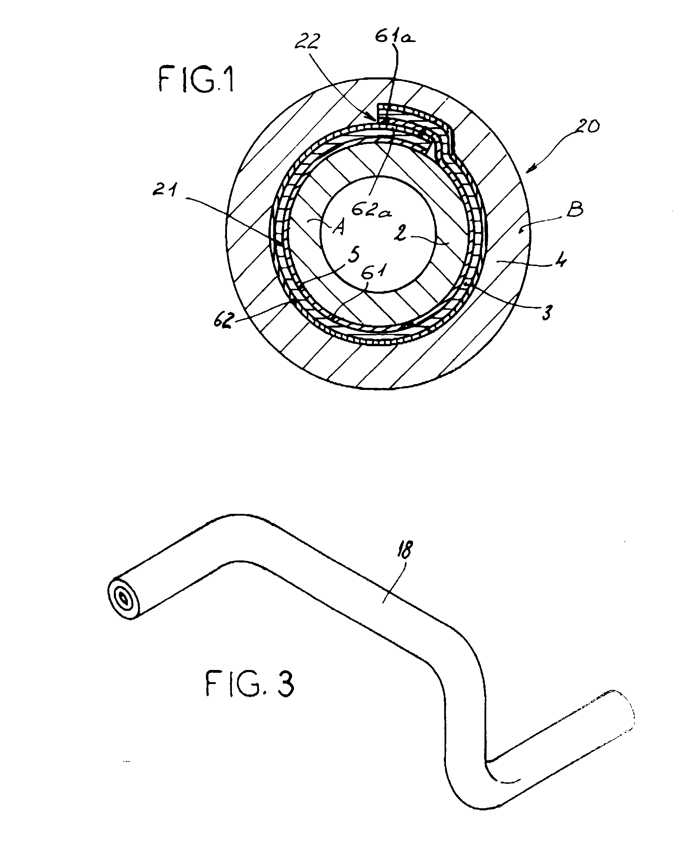

Conformément à la figure 1, un conduit composite 1, formable à froid, comprend de l'intérieur vers l'extérieur :
- un tube interne 2 obtenu par extrusion d'un premier matériau thermoplastique A, à savoir un polyamide technique
- une armature de renfort 21, comprenant un ruban métallique 3, par exemple en aluminium, conformé longitudinalement autour du tube interne 2, avec chevauchement de ses bords longitudinaux, définissant entre eux un joint 22 longitudinal de raccordement, et formant ainsi une gaine métallique tubulaire ; le ruban métallique 3 est lié au tube interne par un premier adhésif 61 compatible avec le premier matériau thermoplastique A
- une gaine externe 4, obtenue par extrusion d'un second matériau thermoplastique B, en l'occurrence une résine oléofinique, par exemple, un polyéthylène EVA ; cette gaine externe est liée à l'armature de renfort (21), obtenue avec le ruban métallique 3, par un deuxième adhésif 62 compatible avec le deuxième matériau thermoplastique B.

Par conséquent, selon l'invention, le premier matériau thermoplastique A du tube interne 2 a, comme on l'a vu, une nature chimique différente du deuxième matériau thermoplastique B de la gaine externe 4.

Toujours selon l'invention, le ruban métallique 3, par exemple en aluminium, comporte, d'un côté le premier adhésif 61, et de l'autre côté le deuxième adhésif 62, moyennant quoi le joint 22, entre les bords chevauchants longitudinaux du ruban métallique 3, met en vis-à-vis une première bande interne 61a du premier adhésif et une deuxième bande interne 62a du deuxième adhésif.

Selon l'invention, le joint de raccordement 22 relie, de manière cohérente, les deux bandes internes 61a et 62a du joint de raccordement 22.

Conformément à la présente invention, différentes solutions peuvent être retenues pour disposer d'un moyen de liaison du joint 22, cohérent avec les bandes internes 61a et 62a d'adhésifs :
1) le premier adhésif 61 et le second adhésif 62 sont identiques à un adhésif unique, compatible avec le premier matériau thermoplastique A, mais relativement moins compatible avec le deuxième matériau thermoplastique B ; dans ce cas l'adhésif unique est réticulé. A titre d'exemple, l'adhésif unique est un polyuréthanne réticulé, notamment un copolymère uréthanne-acrylate
2) le premier adhésif 61 et le second adhésif 62 sont différents, et relativement peu compatibles entre eux ; dans ce cas, le premier adhésif 61 et le second adhésif 62 sont co-réticulés entre eux. A titre d'exemple, le premier adhésif est un copolymère uréthanne-acrylate, et le second adhésif un copolymère éthylène-acide acrylique

Par "compatible" ou "compatibilité, on entend le fait que deux matériaux au contact l'un de l'autre, par exemple selon un plan de joint, sont susceptibles de former un joint homogène relativement résistant, ce qui implique notamment une migration relative des deux matériaux l'un vers l'autre au niveau de leur surface de contact. L'homme du métier des colles et adhésifs sait choisir des matériaux compatibles entre eux, notamment en connaissant leurs natures chimiques respectives.

La réticulation de l'adhésif unique retenue selon la présente invention, ou du premier adhésif et/ou du second adhésif, toujours selon la présente invention, permet de suppléer à toutes incompatibilités relatives des matériaux entre eux, en apportant une bonne liaison mécanique et étanchéité du joint 22.

Préférentiellement, les deux adhésifs 61, 62 sont thermofusibles, ce qui veut dire qu'à froid ils sont relativement inactifs, tandis qu'à chaud ils exercent de manière irréversible leur pouvoir adhésif, par fusion puis solidification. Une telle propriété sera en particulier utile et mise en oeuvre dans le procédé de fabrication d'un conduit composite selon l'invention, décrit ci-après.

Préférentiellement, le deuxième matériau thermoplastique B de la gaine externe 4 est réticulé, et éventuellement également le premier matériau thermoplastique A du tube interne 2. Cette réticulation peut être effectuée par tous moyens bien connus de l'Homme de Métier compétent, tel qu'irradiation sous rayonnement gamma par exemple, incorporation de silane dans les matériaux thermoplastiques considérés, avec traitement postérieur par de la vapeur, par exemple.

Bien entendu, la réticulation est adaptée dans chaque cas à la nature du matériau thermoplastique utilisé et constituant le tube interne 2 ou la gaine externe 4.

Comme on le verra ci-après, cette réticulation permet de fixer définitivement la forme du conduit composite, par exemple de tout élément obtenu par tronçonnage, puis formage d'une section du conduit selon l'invention.

Préférentiellement, le deuxième matériau thermoplastique B est co-réticulé, avec l'adhésif unique retenu selon la présente invention, ou le second adhésif retenu également selon un autre mode d'exécution de la présente invention. Ce choix apparaît en particulier déterminant pour assurer une excellente cohésion entre la gaine externe 4 et l'armature de renfort 21, garante en particulier de la résistance mécanique et de l'étanchéité du conduit composite finalement obtenu.

Le premier et le second adhésif retenu selon l'invention sont par ailleurs compatibles avec le métal ou l'alliage métallique du ruban 3, de manière à assurer également une liaison relativement résistante vis à vis de ce dernier.

Conformément au mode d'exécution de la figure 1, le premier adhésif 61 et le second adhésif 62 sont identiques à un adhésif unique compatible avec le premier matériau thermoplastique A, mais moins compatible avec le second matériau thermoplastique B, et le moyen de liaison du joint 22 consiste alors en une simple jonction réticulée entre les deux bandes internes 61a et 62a.

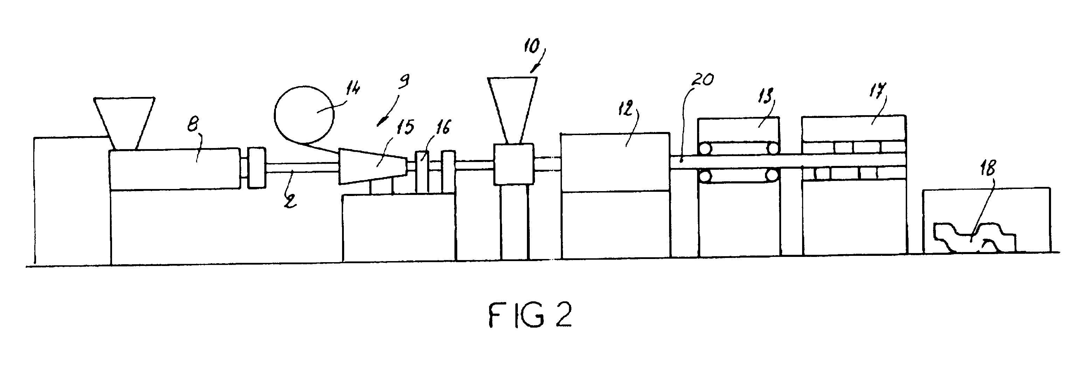

Comme le montre la figure 2, l'installation pour la fabrication d'un élément de conduit composite, formable à froid, conforme à la présente invention, comprend dans le sens de fabrication dudit élément ou conduit :
- une extrudeuse 8 formant le tube interne 2, dans le premier matériau thermoplastique A
- un dispositif 9 de formation de l'armature de renfort 21, à partir d'un ruban métallique continu 3
- une extrudeuse 10 assurant la formation de la gaine externe 4 dans le deuxième matériau thermoplastique B
- un bac de refroidissement 12
- et des moyens 13 de tirage du conduit composite ainsi obtenu, par exemple une chenille de tirage.

De façon connue en soi, le dispositif 9 de formation de l'armature de renfort 21 comporte un support pour une bobine 14 du ruban métallique 3, par exemple en aluminium, revêtu sur ces deux faces respectivement avec le premier adhésif 61 et le deuxième adhésif 62, tous les deux thermofusibles, et un conformateur 15 forçant le ruban à envelopper le tube interne 2, dans la direction de sa longueur, et entraînant le chevauchement de ses bords longitudinaux.

Pour la réalisation de conduits composites selon la forme d'exécution de la figure 3, le conformateur 15 est suivi par un anneau de calibrage 16 qui, en forçant le joint de raccordement 22 à s'encastrer dans la matière chaude et encore malléable, du tube interne 2, donne à l'armature une forme cylindrique améliorant l'étanchéité du joint de raccordement 22.

Immédiatement après son extrusion, le tube interne 2 est recouvert par l'armature 3, qui est elle-même immédiatement recouverte par la gaine externe 4, provenant de l'extrudeuse 10.

Les calories du premier matériau thermoplastique A, mais aussi celles du deuxième matériau thermoplastique B assurent la fusion des deux couches des adhésifs thermosensibles 61 et 62, et éventuellement leur réticulation. Il en résulte que ces deux couches assurent une liaison positive du tube interne 2 et de la gaine externe 4 avec l'armature 3 métallique. Ainsi, à la sortie de l'extrudeuse 10, le complexe tube-armature-gaine forme un ensemble 20 monolithique, composite parfaitement cohérent.

Le conduit composite 20 est refroidi dans le bac 12, à la sortie de la chenille de tirage 13, et est, soit tronçonné en sections, ou soit enroulé sur des bobines, soit est directement mis en forme par un dispositif de formage à galets ou autres, représenté schématiquement en 17.

En particulier, grâce à la grande résistance mécanique du joint 22, et son élasticité relative, la mise en forme du conduit composite 20 entraîne un écrasement réduit de ce dernier, et en particulier de l'armature ; cette mise en forme préserve aussi l'étanchéité du conduit composite 20. Cette armature assure le maintien de la forme donnée au conduit, jusqu'à la phase suivante de réticulation des matériaux B et éventuellement A, constituant, respectivement, le tube interne 2 et la gaine externe 4, et, éventuellement de coréticulation du second 62 et/ou du premier adhésif 61. Cette réticulation donne à au moins l'un des deux matériaux A et B un comportement thermodurcissable, qui lui permet de fixer le conduit dans la forme qu'il lui a été donnée ; cette forme devient ainsi définitive et demeure pratiquement insensible aux variations thermiques ou charges appliquées au conduit.

Des éléments de conduit, ayant ainsi obtenu leur forme définitive, et pouvant être en particulier utilisés dans l'industrie automobile, pour transporter différents fluides, tels que eau, essence, air ou lubrifiant, sont représentés sous la référence numérique 18.

L'opération de formage peut être assurée en continu, ou comme précédemment sur des sections de conduit composite, tronçonnées ; dans ce dernier cas, le formage des sections peut être effectué immédiatement après la fabrication du conduit composite, ou ultérieurement après stockage des différentes sections.

Comme le montre la figure 3, le conduit composite 20 selon l'invention permet de réaliser des éléments formés 18, ayant des formes complexes, conservant dans le temps la forme qu'il leur est donnée, et cela pour un coût de transformation relativement peu élevé.

Deux exemples d'exécution de la présente invention sont maintenant décrits.

### Exemple n° 1

Le conduit composite est constitué :
- d'un tube interne (2) composé d'un polyamide obtenu par polycondensation d'acide 11 amino undécanoïque, d'épaisseur égale à 0,4 mm,
- d'un ruban (3) aluminium d'épaisseur 0,2 mm, revêtu sur ses deux faces d'un polymère polyuréthanne acrylate thermofusible réticulable, avec une température de ramollissement proche de 130°C, et une épaisseur de 25 µm,
- d'une gaine externe (4) constituée d'un polyéthylène chargé d'hydrate d'aluminium et de dérivés halogénés, nécessaires à son ignifugation, d'épaisseur moyenne de 1,4 mm, portant le diamètre extérieur du conduit composite à 10 mm

L'adhésif polyuréthanne acrylate lors du procédé défini précédemment, assure un collage physique avec le polyéthylène ignifugé et externe, et une liaison physico-chimique avec le polyamide interne. L'action de rayons gamma, en fin de procédé, sur l'ensemble du tube, provoque la coréticulation, simultanée de l'adhésif et de la gaine externe 2 en polyéthylène. Une adhésion satisfaisante est ainsi obtenue entre le polyéthylène et la feuille d'aluminium 3. Le joint polyuréthanne réticulé apporte de plus une excellente tenue en température à l'ensemble.

Dans les conditions de test en vigueur dans l'industrie automobile, ce type de tube composite offre une perméabilité aux carburants de 0,39 g/m²/h et une tenue au feu comprise entre 1 mn 15 s et 1 mn 30 s ; la résistance en température de ce produit permet de le référencer dans la classe de tenue 125°C.

### Exemple n° 2

Le conduit composite est constitué :
- d'un tube interne (2) composé d'un polyamide obtenu par polycondensation d'acide 11 amino undécanoïque (ou d'acide 12 amino dodécanoïque), d'épaisseur égale à 0,4mm
- d'un ruban (3) aluminium d'épaisseur 0,2 mm, revêtu :
   * sur la face en contact avec le polyamide, d'un adhésif polyuréthanne thermofusible réticulé d'épaisseur 25 µm,
   * sur la face en contact avec le polyéthylène, contre le ruban, d'un adhésif polyuréthanne acrylate de même nature, d'épaisseur 25 µm, sur lequel est immédiatement déposé un film de copolymère Ethylène acide acrylique, d'épaisseur 20 µm,
- d'une gaine extérieure (4) constituée d'un polyéthylène chargé d'hydrate d'aluminium et de dérivés halogénés, nécessaire à son ignifugation, d'épaisseur moyenne, 1,4 mm ; portant le diamètre extérieur du tube composite à 10 mm.

Le polyuréthanne acrylate et le copolymère éthylène acide acrylique assurent un collage physico-chimique respectivement avec les matériaux plastiques avec lesquels ils sont en contact, et entre eux, afin de constituer un tube composite homogène.

En l'état, la perméabilité aux carburants est mesurée à 0,40 g/m²/h et la résistance au feu s'établit entre 1 mn et 1mn 10. En ce qui concerne sa tenue en température, le conduit peut être classé 100°C.

Si l'on soumet le conduit à l'action des rayons gamma, (du fait de la réticulation des polymères choisis réactifs vis-à-vis des électrons rapides), la perméabilité reste inchangée, la résistance au feu est portée à 1 mn 30 s ; sa tenue en température améliorée le fait passer dans la classe 125°C.

## Revendications

1. Conduit composite (20), formable à froid, comprenant de l'intérieur vers l'extérieur
- un tube interne (2), en un premier matériau thermoplastique (A), obtenu par extrusion,
- une armature de renfort (21), comprenant un ruban métallique (3) continu entourant le tube interne (2), avec chevauchement de ses bords en définissant entre eux un joint (22) de raccordement, et formant ainsi une gaine métallique tubulaire, ledit ruban métallique (3) étant lié au tube interne par un premier adhésif (61),
- une gaine externe (4), en un second matériau thermoplastique (B) ayant une nature chimique différente du premier matériau thermoplastique (A), obtenue notamment par extrusion, liée à l'armature de renfort (21) par un deuxième adhésif (62) compatible avec le deuxième matériau thermoplastique (B)
- moyennant quoi, le joint (22) met en vis-à-vis une première bande interne (61a) du premier adhésif, et une deuxième bande interne (62a) du deuxième adhésif, le premier adhésif (61) étant compatible avec le premier matériau thermoplastique, et étant éventuellement identique au deuxième adhésif (62),
**caractérisé en ce que** les première (61a) et deuxième (62a) bandes internes du joint (22), liées l'une à l'autre, sont réticulées ou co-réticulées chimiquement, et forment ainsi une liaison cohérente.

2. Conduit selon la revendication 1, caractérisé en ce que le premier adhésif (61) et le second adhésif (62) sont identiques à un adhésif unique, compatible avec le premier matériau thermoplastique (A), mais moins compatible avec le deuxième matériau thermoplastique (B), et ledit adhésif unique est réticulé entre les bandes internes (6 la) et (62a).

3. Conduit selon la revendication 2, caractérisé en ce que l'adhésif unique est un polyuréthanne, notamment un copolymère uréthanne-acrylate

4. Conduit selon la revendication 1, caractérisé en ce que le premier adhésif (61) et le second adhésif (62) sont différents, relativement peu compatibles entre eux, et sont co-réticulés entre les bandes internes (61a) et (62a).

5. Conduit selon la revendication 4, caractérisé en ce que le premier adhésif (61) est un copolymère uréthanne-acrylate, et le second adhésif (62) un copolymère éthylène-acide-acrylique.

6. Conduit selon la revendication 1, caractérisé en ce que les deux adhésifs (61, 62) sont thermofusibles.

7. Conduit selon la revendication 2, caractérisé en ce que l'adhésif unique est co-réticulé avec le deuxième matériau thermoplastique (B).

8. Procédé de fabrication d'un conduit composite (20) formable à froid, comprenant les étapes suivantes :
a) extruder un tube interne (2) en un premier matériau thermoplastique (A),
b) former à partir d'un ruban métallique (3) continu, une armature de renfort (21), avec chevauchement de ses bords définissant entre eux un joint (22) de raccordement, en obtenant ainsi une gaine métallique tubulaire,
c) extruder une gaine externe (4) en un second matériau thermoplastique (B), ayant une nature chimique différente du premier matériau thermoplastique (A),
d) revêtir le ruban métallique (3) d'un côté, avec un premier adhésif (61), et de l'autre côté, avec un deuxième adhésif (62) compatible avec le deuxième matériau thermoplastique (B), moyennant quoi, d'une part, le joint (22) met en vis-à-vis une première bande interne (61a) du premier adhésif, et une deuxième bande interne (62a) du deuxième adhésif, et d'autre part, l'armature de renfort (21) est liée au tube interne 2 et à la gaine externe (4),
caractérisé en ce que le procédé de fabrication comporte, d'une part, le choix d'un premier adhésif (61) réticulable compatible avec le premier matériau thermoplastique (A), et d'un deuxième adhésif (62), réticulable, compatible avec le deuxième matériau, éventuellement identique au premier adhésif, et d'autre part, une étape de réticulation ou coréticulation chimique des bandes adhésives internes (61a et 62a) liées l'une à l'autre, au niveau du joint (22) de raccordement de l'armature de renfort, et suffisante pour obtenir une liaison cohérente dudit joint (22).

## Patentansprüche

1. Kaltverformbares Verbundrohr (20), umfassend von innen nach außen
- ein durch Extrusion erhaltenes Innenrohr (2) aus einem ersten thermoplastischen Material (A),
- eine Armierung (21), welche ein das Innenrohr (2) umgebendes kontinuierliches metallisches Band (3) aufweist, dessen Ränder überlappen, wobei zwischen ihnen eine Anschlußverbindung (22) begrenzt ist und somit eine rohrförmige metallische Umhüllung gebildet ist, und wobei das metallische Band (3) durch einen ersten Klebstoff (61) mit dem Innenrohr verbunden ist,
- eine, insbesondere durch Extrusion erhaltene, Außenumhüllung (4) aus einem zweiten thermoplastischen Material (B) mit einer vom ersten thermoplastischen Material (A) verschiedenen chemischen Beschaffenheit, welche durch einen mit dem zweiten thermoplastischen Material (B) kompatiblen zweiten Klebstoff (62) mit der Armierung (21) verbunden ist,
- wodurch die Verbindung (22) gegenüber einem ersten Innenstreifen (61a) des ersten Klebstoffs und einem zweiten Innenstreifen (62a) des zweiten Klebstoffs vorliegt, wobei der erste Klebstoff (61) kompatibel mit dem ersten thermoplastischen Material und gegebenenfalls identisch mit dem zweiten Klebstoff (62) ist,
**dadurch gekennzeichnet**, daß der erste Innenstreifen (61a) und der zweite Innenstreifen (62a) der Verbindung (22), welche miteinander verbunden sind, chemisch vernetzt oder miteinander vernetzt sind und somit eine kohärente Verbindung ausbilden.

2. Rohr nach Anspruch 1,
**dadurch gekennzeichnet**, daß der erste Klebstoff (61) und der zweite Klebstoff (62) identisch mit einem einzigen Klebstoff sind, welcher kompatibel mit dem ersten thermoplastischen Material (A), aber weniger kompatibel mit dem zweiten thermoplastischen Material (B) ist, wobei der einzige Klebstoff zwischen den Innenstreifen (61a) und (62a) vernetzt ist.

3. Rohr nach Anspruch 2,
**dadurch gekennzeichnet,** daß der einzige Klebstoff ein Polyurethan ist, insbesondere ein Urethan-Acrylat-Copolymer.

4. Rohr nach Anspruch 1,
**dadurch gekennzeichnet,** daß der erste Klebstoff (61) und der zweite Klebstoff (62) verschieden sind, relativ wenig miteinander kompatibel sind und zwischen den Innenstreifen (61a) und (62a) miteinander vernetzt sind.

5. Rohr nach Anspruch 4,
**dadurch gekennzeichnet**, daß der erste Klebstoff (61) ein Urethan-Acrylat-Copolymer ist und der zweite Klebstoff (62) ein Ethylen-Acrylsäure-Copolymer ist.

6. Rohr nach Anspruch 1,
**dadurch gekennzeichnet**, daß die zwei Klebstoffe (61, 62) thermoschmelzbar sind.

7. Rohr nach Anspruch 2,
**dadurch gekennzeichnet,** daß der einzige Klebstoff mit dem zweiten thermoplastischen Material (B) zusammen vernetzt ist.

8. Verfahren zur Herstellung eines kaltverformbaren Verbundrohrs (20), umfassend die folgenden Schritte:
a) Extrudieren eines Innenrohrs (2) aus einem ersten thermoplastischen Material (A),
b) Bilden einer Armierung (21) aus einem kontinuierlichen metallischen Band (3), dessen Ränder, die zwischen sich eine Anschlußverbindung (22) begrenzen, überlappen, wobei somit eine rohrförmige metallische Umhüllung erhalten wird,
c) Extrudieren einer Außenumhüllung (4) aus einem zweiten thermoplastischen Material (B) mit einer vom ersten thermoplastischen Material (A) verschiedenen chemischen Beschaffenheit,
d) Überziehen des metallischen Bands (3) auf einer Seite mit einem ersten Klebstoff (61) und auf der anderen Seite mit einem mit dem zweiten thermoplastischen Material (B) kompatiblen zweiten Klebstoff (62), wodurch einerseits die Verbindung (22) gegenüber einem ersten Innenstreifen (61a) des ersten Klebstoffs und einem zweiten Innenstreifen (62a) des zweiten Klebstoffs vorliegt, und andererseits die Armierung (21) mit dem Innenrohr (2) und mit der Außenumhüllung (4) verbunden ist,
**dadurch gekennzeichnet**, daß das Verfahren zur Herstellung umfaßt:
einerseits die Wahl eines vernetzbaren ersten Klebstoffs (61), der mit dem ersten thermoplastischen Material (A) kompatibel ist, sowie eines vernetzbaren zweiten Klebstoffs (62), der mit dem zweiten Material kompatibel ist und gegebenenfalls identisch mit dem ersten Klebstoff ist, und andererseits einen Schritt der chemischen Vernetzung oder Vernetzung miteinander der miteinander verbundenen Innenklebestreifen (61a und 62a) im Bereich der Anschlulßverbindung (22) der Armierung und hinreichend zur Erzielung einer kohärenten Bindung der Verbindung (22).

## Claims

1. A cold formable composite pipe (20) comprising, from the interior to the exterior
- an internal tube (2), of a first thermoplastic material (A), obtained by extrusion,
- a reinforcing element (21), comprising a continuous metal tape (3) surrounding the internal tube (2), with overlapping of its edges defining between them a connecting joint (22) and thus forming a tubular metal sheath, the metal tape (3) being connected to the internal tube by a first adhesive (61),
- an external sheath (4), in a second thermoplastic material (B) having a chemical nature different from the first thermoplastic material (A), obtained particularly by extrusion, connected to the reinforcing element (21) by a second adhesive (62) compatible with the second thermoplastic material (B),
- by means of which, the joint (22) disposes in opposition a first internal strip (61a) of the first adhesive, and a second internal strip (62a) of the second adhesive, the first adhesive (61) being compatible with the first thermoplastic material and being possibly identical to the second adhesive (62),
characterised in that the first (61a) and second (62a) internal interconnected strips of the joint (22) are chemically crosslinked or co-crosslinked and thus form a coherent connection.

2. A pipe according to Claim 1, characterised in that the first adhesive (61) and the second adhesive (62) are identical with a single adhesive compatible with the first thermoplastic material (A), but less compatible with the second thermoplastic material (B), and said single adhesive is crosslinked between the internal strips (61a) and (62a).

3. A conduit according to Claim 2, characterised in that the single adhesive is a polyurethane, particularly a urethane-acrylate copolymer.

4. A conduit according to Claim 1, characterised in that the first adhesive (61) and the second adhesive (62) are different, of relatively small mutual compatibility, and are co-crosslinked between the internal strips (61a) and (62a).

5. A conduit according to Claim 4, characterised in that the first adhesive (61) is a urethane-acrylate copolymer, and the second adhesive (62) an ethylene-acid-acrylic copolymer.

6. A conduit according to Claim 1, characterised in that the two adhesives (61, 62) are thermofusible.

7. A conduit according to Claim 2, characterised in that the single adhesive is co-crosslinked with the second thermoplastic material (B).

8. A method of manufacturing a cold formable composite pipe (20), comprising the following steps:
a) extruding an internal tube (2) in a first thermoplastic material (A),
b) forming, from a continuous metal tape, a reinforcing element (21), with overlapping of its edges defining between them a connecting joint (22), and thus obtaining a tubular metal sheath,
c) extruding an external sheath (4) in a second thermoplastic material (B), having a chemical nature different from the first thermoplastic material (A),
d) covering the metal tape (3) at one side with a first adhesive (61) and at the other side with a second adhesive (62) compatible with the second thermoplastic material (B), by means of which, on the one hand, the joint (22) disposes in opposition a first internal strip (61a) of the first adhesive, and a second internal strip (62a) of the second adhesive, and on the other hand, the reinforcing element (21) is connected to the internal tube (2) and to the external sheath (4),
characterised in that the manufacturing method includes, on the one hand, the choice of a first crosslinkable adhesive (61) compatible with the first thermoplastic material (A) and a second crosslinkable adhesive (62) compatible with the second material, possibly identical with the first adhesive, and on the other hand, a step of chemical crosslinking or co-crosslinking of the internal adhesive strips (61a) and (62a) interconnected in the region of the connecting joint (22) of the reinforcing element, and sufficient for obtaining a coherent connection of the joint (22).
